# EUROPEAN PATENT APPLICATION

(11) **EP 1 956 283 A2**
(43) Date of publication of application: **13.08.2008**
(21) Application number: 08075075.5
(22) Date of filing: 30.01.2008
(51) Int. Cl.: F16N 7/38, F16N 25/00

(54) **Lubrication system vehicle such as a refuse collection truck provided with such a lubrication system and method therefor**

(30) Priority: 31.01.2007 NL 1033308
(71) Applicant: Terberg Machines B.V., 3403 NL Ijsselstein (NL)
(72) Inventor: Versteeg, Jan Paul, 6708 RV Wageningen (NL)
(74) Representative: Bruin, Cornelis Willem

(57) **Abstract**

The present invention relates to a lubrication system, method and vehicle provided with a lubrication system, comprising:
- a distribution station for distributing supplied lubricant;
- a feed connection arranged on the distribution station for feeding lubricant to the distribution station;
- at least one lubrication conduit connected to the distribution station for the purpose of transporting lubricant to the at least one lubricating point;
- a lubricant meter for measuring the quantity of supplied lubricant; and
- a processing unit connected operationally to the lubricant meter for the purpose of indicating required lubrication.

## Description

The present invention relates to a system for lubricating at least one lubricating point. Such a lubrication system is used to lubricate parts which move relative to each other, as this occurs, among other cases, in a loading system placed on a vehicle such as a refuse collection truck. Such a loading system picks up a container, causes it to undergo a pivoting movement and then empties the content of such a container into the refuse truck. Lubrication is required with some regularity due to the movements which occur.

A maintenance schedule is usually employed in practice to determine the timing of a lubrication service. The lubrication is usually performed manually here per lubricating point. Such an approach involves the risk, among others, of lubricating points being forgotten or of too much or too little lubricant being applied thereto. This can cause damage which can result in additional costs, extra maintenance and additional downtime. Prevention hereof requires more frequent lubrication of the lubricating points, which in turn results in extra costs and longer downtime.

The present invention has for its object to provide a lubrication system which provides the lubrication requirement of a device, such as a loading system for a refuse collection truck, in an efficient manner.

The present invention provides for this purpose a lubrication system for lubricating at least one lubricating point, comprising:
- a distribution station for distributing supplied lubricant;
- a feed connection arranged on the distribution station for feeding lubricant to the distribution station;
- at least one lubrication conduit connected to the distribution station for the purpose of transporting lubricant to the at least one lubricating point;
- a lubricant meter for measuring the quantity of supplied lubricant; and
- a processing unit connected operationally to the lubricant meter for the purpose of indicating required lubrication.

By providing the lubrication system with a distribution station having a feed connection arranged centrally thereon the lubricant, such as for instance grease or oil optionally provided with additives, can be fed centrally at one point to this distribution station. The supplied lubricant is subsequently distributed by this distribution station among the selected lubricating points of the device for lubricating. Each lubricating point is connected for this purpose to the distribution station by means of a lubrication conduit. A lubricant meter is also provided for the purpose of determining the quantity of lubricant supplied. Thus is known how much lubricant is fed to each lubricating point and when feed of lubricant to the distribution station can be stopped. A processing unit is also connected operationally to the lubricant meter for the purpose of indicating required lubrication. The processing unit is preferably a calculating unit with which calculations can be made, if desired, on the basis of the information available, including the quantity of supplied lubricant measured. Such an operational connection can be realized, among other ways, using a signal wire between the lubricant meter and the processing unit. Using the measured quantity of lubricant supplied to a lubricating point, it is hereby possible to calculate when the subsequent lubrication is required. This achieves that the lubrication is geared to the requirement, and prevents lubricating points being provided with too much, too little or no lubricant at all. This limits damage to the device and avoids additional maintenance operations. In addition, undesirable downtime during for instance use of the vehicle will also be reduced.

In a preferred embodiment according to the invention the lubricating points are provided at least at some of the rotation points and/or guides of a loading system for emptying a container.

A loading system for emptying a container, such as a refuse bin, comprises a number of lifting arms which engage on a container such as a bin. These lifting arms then carry the bin via for instance a pivoting movement to a position above a central container, for instance of a refuse truck, for the purpose of emptying. In order to make the pivoting movement a number of rotation points are provided on the loading system, each requiring some degree of lubrication. The lubrication system provides these rotation points and/or guides with lubricating points for feed of the required lubricant. A relatively large number of lubrication services are required due to the relatively high-frequency use of such a loading system. The lubrication system achieves that the quantity of lubricant supplied is geared to the requirement thereof by the loading system. Use is preferably made of information relating to the frequency of use of the loading system, more preferably in combination with the load exerted thereon by the containers, in order to allow the processing unit to determine, on the basis of the measured quantity of supplied lubricant, the next point in time lubrication is required and/or quantity of lubricant. The processing unit can herein form part of a central control system for the whole device or, in the case of a refuse collection truck, of the control thereof.

In a preferred embodiment according to the invention the processing unit is connected operationally to an indicator for reporting a status of the lubrication system.

Coupling of the processing unit to an indicator achieves that the user is informed of the fact that lubrication of the at least one lubricating point is required. Such a lubrication can then for instance be performed as soon as the device is no longer being used. In the case of a refuse collection truck the maintenance can thus be carried out for instance as soon as the truck returns to the central workplace. The user can be the user of the loading system himself. In the case of a refuse collection truck this is then the dustman. The user can optionally also be a centre manager who is informed that a specific device requires lubrication. This enables further optimization of the planning of the required lubrication services. The indicator can also indicate for instance that sufficient lubricant is supplied during a lubrication service. Indication of the status of the lubrication system can be made to the user of the loading system by means of for instance a lamp or display screen.

In a further preferred embodiment according to the invention the processing unit is connected operationally to the control of the loading system.

The operational connection of the processing unit to the control of the loading system achieves that the control system can intervene in the use of the loading system. This is desirable for instance if the processing system indicates that lubrication is required. Limitation of use can for instance be envisaged as a general blocking of the loading system. However, in the case of a refuse collection truck which may be located during use on for instance a housing estate, it is also possible to envisage limiting the number of movements still to be performed. This avoids damage with the associated costs and problems.

In a further preferred embodiment according to the invention a lubricant meter is provided for each individual lubricating point.

Providing each individual lubricating point with a lubricant meter enables an even more precise determination of the quantity of lubricant supplied to each individual lubricating point. A different quantity of lubricant can here also be employed per lubricating point. A reliable measurement is hereby obtained.

The invention further relates to a method for lubricating a loading system for emptying a container, comprising the steps of:
- feeding a lubricant to a distribution station via a feed connection;
- distributing the lubricant over at least one lubricating point in the distribution station;
- transporting the lubricant via at least one lubrication conduit to the at least one lubricating point;
- measuring the quantity of supplied lubricant with a lubricant meter; and
- indicating a required lubricant service using a processing unit connected operationally to the lubricant meter.

It is possible by means of the method to provide a loading system for emptying a container, as applied for instance in a refuse collection truck, in correct manner with sufficient lubricant to limit damage and downtime. The measurement of the quantity of lubricant supplied is preferably used, among other purposes, for recording the overall quantity of lubricant supplied. If desired, a separate budget control for the relevant lubricant can for instance hereby also be realized. Account is preferably taken of the frequency of use and/or load occurring on the movable parts of the loading system, such as rotation points and guides. The processing unit can hereby determine for instance the next point in time lubrication is required and/or the anticipated lifespan of components and/or the required quantity of lubricant.

The present invention further also relates to a vehicle, such as a refuse collection truck, provided with a lubrication system as according to one or more of the claims 1-6. This provides the same effects and advantages as those stated in respect of the lubrication system.

Further advantages, features and details of the invention are elucidated on the basis of a preferred embodiment, wherein reference is made to the accompanying drawings, in which:
fig. 1 shows a side view of a vehicle provided with a lubrication system according to the invention; and
fig. 2 shows a rear view of the vehicle of fig. 1 having therein the lubrication system according to the invention.

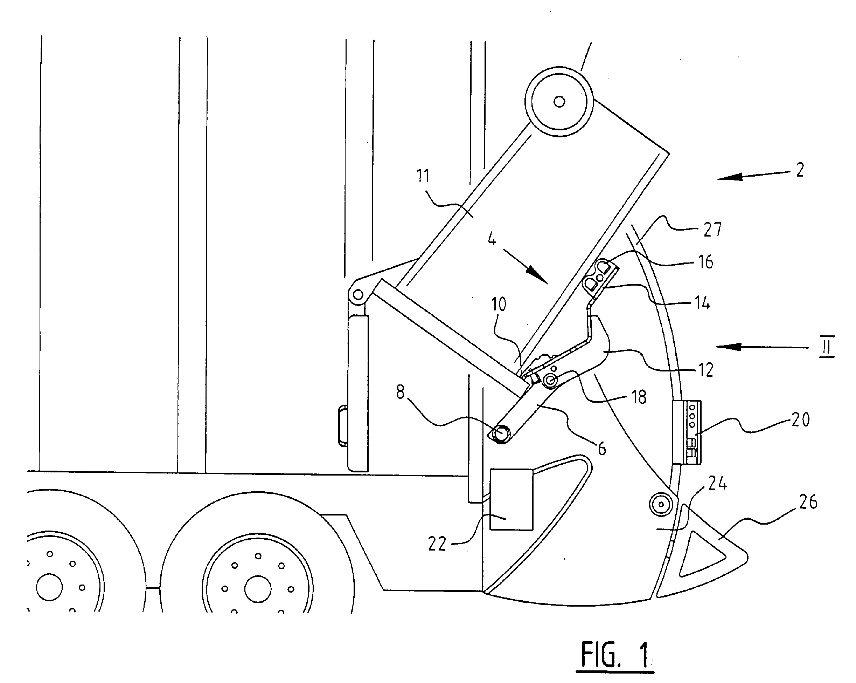

A refuse collection truck 2 (fig. 1) has a loading system 4 at the rear. This loading system 4 has a lifting arm 6 which can rotate around rotation point 8. The loading system engages with hooks or a fork 10 on a container 11 to be emptied, wherein this container 11 is further supported during the pivoting movement. For this further support lifting arm 6 is connected via support 12 to support part 14 with contact part 16 mounted thereon. Contact part 16 supports the container for emptying during the whole pivoting process. Support 12 with support part 14 and contact part 16 thereon can herein rotate around rotation point 18. Operation of loading system 4 takes place using control panel 20 arranged at the rear of refuse truck 2. Refuse truck 2 is also provided with an indicator 22 in the form of a lamp and/or display. This can optionally be combined with control panel 20. Indicated 22 is arranged on or close to side 24 of loading system 4 at the rear of refuse truck 2. A protective part 26 is also arranged on side 24. Control panel 20 is connected by means of a user support 27 to side 24.

Various movements of loading system 4 are performed during a pivoting movement. Components move relative to each other at, among others, rotation points 8 and 18. Some form of lubrication is required here. The lubrication requirement can be indicated by means of indicator 22, whereby the user of loading system 4 is informed that lubrication must be performed.

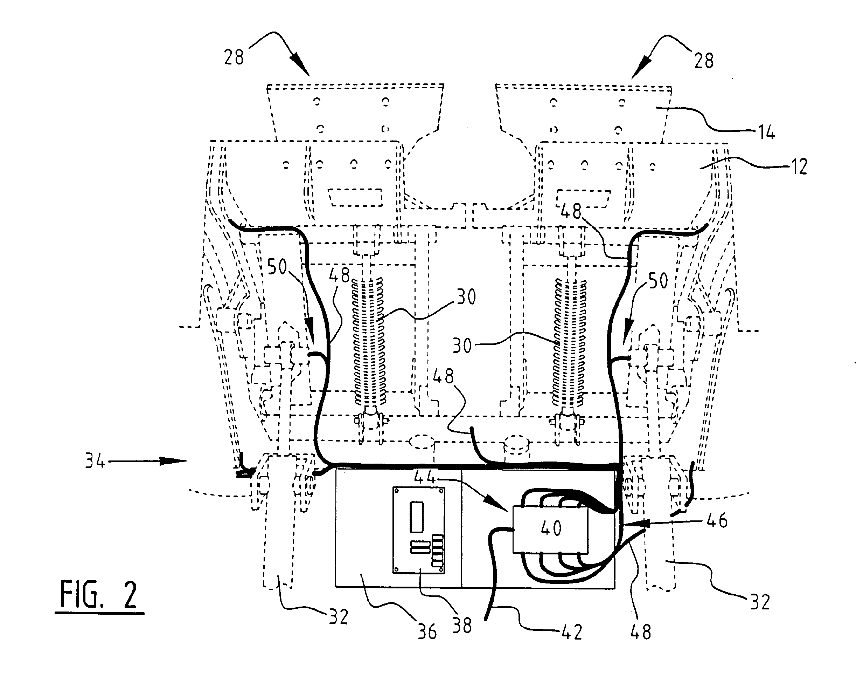

In the shown embodiment loading system 4 has two sub-loading systems 28 (fig. 2). These sub-loading systems can each be activated individually or simultaneously as required by means of arms 30 and actuators 32. Lubrication system 34 comprises a processing unit 36 and a control panel or display screen 22, 38 with which a user and processing unit 36 exchange information. Use can be made here for the control panel and/or display screen of one or both positions, i.e. indicator 22 or panel 38. Lubrication system 34 further comprises distribution station 40 having a feed conduit 42 connected thereto using connection point 44. Distribution station 40 is further provided with a lubricant meter 46. Lubrication conduits 48 run from distribution station 40 to the various lubricating points 50 of loading system 4.

If a user is informed on a display screen 38 or indicator 22 that lubrication is required, feed conduit 42 can be connected to a central lubricant supply point which can for instance be situated at the central departure point for refuse trucks 2. Distribution station 40 then distributes the supplied lubricant among the different lubricating points 50, wherein the lubricant is transported via lubrication conduits 48. Lubricant meter 46 measures the quantity of lubricant supplied. Lubricant meter 46 is here connected operationally to processing unit 36. Processing unit 36 can in turn be coupled to the control unit for, among other parts, actuators 30 and 32 and control panel 20 for the purpose of limiting, blocking or, conversely, unblocking use of loading system 4.

The present invention is by no means limited to the above described embodiments; the rights sought are defined by the following claims, within the scope of which many modifications can be envisaged. It is thus possible for instance to combine processing unit 36 with the central control or central data processor, such as an onboard computer, of refuse truck 2. This can then, if desired, send the required information to for instance the central departure station to enable better organization of, among other matters, maintenance. It is also possible for instance to place the central lubricant provision not at the departure station for refuse trucks 2, but to provide each refuse truck 2 with its own supply of lubricant in order to hereby provide lubricating points 50 with lubricant when necessary via feed conduit 42 and distribution station 40. Although lubrication system 34 is shown as it is intended for a loading system 4 for a refuse collection truck 2, it can also be used for other systems, for instance for all lubricating points of refuse truck 2 or for wholly different systems.

## Claims

1. Lubrication system for lubricating at least one lubricating point, comprising:
- a distribution station for distributing supplied lubricant;
- a feed connection arranged on the distribution station for feeding lubricant to the distribution station;
- at least one lubrication conduit connected to the distribution station for the purpose of transporting lubricant to the at least one lubricating point;
- a lubricant meter for measuring the quantity of supplied lubricant; and
- a processing unit connected operationally to the lubricant meter for the purpose of indicating required lubrication.

2. Lubrication system as claimed in claim 1, wherein the lubricating points are provided at least at some of the rotation points and/or guides of a loading system for emptying a container.

3. Lubrication system as claimed in claim 2, wherein the loading system is arranged on a vehicle such as a refuse collection truck.

4. Lubrication system as claimed in claim 1, 2 or 3, wherein the processing unit is connected operationally to an indicator for reporting a status of the lubrication system.

5. Lubrication system as claimed in one or more of the claims 1-4, wherein the processing unit is connected operationally to the control of the loading system.

6. Lubrication system as claimed in one or more of the claims 1-5, wherein the lubricant meter is provided for an individual lubricating point.

7. Method for lubricating a loading system for emptying a container, comprising the steps of:
- feeding a lubricant to a distribution station via a feed connection;
- distributing the lubricant over at least one lubricating point in the distribution station;
- transporting the lubricant via at least one lubrication conduit to the at least one lubricating point;
- measuring the quantity of supplied lubricant with a lubricant meter; and
- indicating a required lubricant service using a processing unit connected operationally to the lubricant meter.

8. Method as claimed in claim 7, wherein the measurement of the quantity of lubricant supplied is performed per lubricating point.

9. Method as claimed in claim 7 or 8, wherein a measurement of the quantity of lubricant is used to determine the next point in time for feeding lubricant.

10. Method as claimed in claim 7, 8 or 9, wherein the measurement of the quantity of lubricant is used to generate an unblocking signal and/or blocking signal for the loading system.

11. Method as claimed in one or more of the claims 7-10, wherein the measurement of the quantity of lubricant is used for the purpose of recording by the processing unit of the quantity of lubricant supplied.

12. Method as claimed in one or more of the claims 7-11, wherein the frequency of use and/or load occurring on the movable parts of the loading system is used by the processing unit to determine the next point in time lubrication is required and/or anticipated lifespan and/or quantity of lubricant to be supplied.

13. Vehicle, such as a refuse collection truck, provided with a lubrication system as claimed in one or more of the claims 1-6.
